# EUROPEAN PATENT APPLICATION

(11) **EP 4 770 165 A1**
(43) Date of publication of application: **01.07.2026**
(21) Application number: 24856253.0
(22) Date of filing: 02.08.2024
(51) Int. Cl.: H04W 16/28, H04W 36/08

(54) **TERMINAL, WIRELESS COMMUNICATION METHOD, AND BASE STATION**

(30) Priority: 21.08.2023 JP 2023133911
(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing, 100190 (CN)
(74) Representative: Hoffmann Eitle
(86) International application number: PCT/JP2024/027703
(87) International publication number: WO 2025/041561

(57) **Abstract**

A terminal according to one aspect of the present disclosure includes a receiving section that receives information related to a target cell to be a switching candidate for a serving cell and information related to a transmission configuration indication (TCI) state, and a control section that determines a TCI state switching delay, based on an active TCI state list included in the information related to the TCI state.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 17/5G or later), communication is controlled based on inter-cell mobility with a plurality of cells including a non-serving cell or inter-cell mobility using a plurality of transmission/reception points (for example, multi-TRP (MTRP)). It is also assumed that, in inter-cell mobility, a candidate cell is configured, and switching/switch between the serving cell and the candidate cell is performed by using L1/L2 signaling.

Meanwhile, applying inter-cell mobility (for example, switching between a serving cell and a candidate cell) poses a problem of how to configure/apply a transmission configuration indication state (TCI state) corresponding to the candidate cell. Unless appropriate configuration/application of the TCI state for the candidate cell fails, communication quality may be degraded.

The present disclosure has been made in view of this respect, and an object of the present disclosure is to provide a terminal, a radio communication method, and a base station that enable appropriate control even when a TCI state switching delay is supported.

### Solution to Problem

A terminal according to one aspect of the present disclosure includes a receiving section that receives information related to a target cell to be a switching candidate for a serving cell and information related to a transmission configuration indication (TCI) state, and a control section that determines a TCI state switching delay, based on an active TCI state list included in the information related to the TCI state.

### Advantageous Effects of Invention

According to one aspect of the present disclosure, even when a TCI state switching delay is supported, communication can be appropriately controlled.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of LTM procedure.
[FIG. 3] FIG. 3 is a diagram to show an example of comparison between L3 handover and Rel-18 LTM.
[FIG. 4] FIG. 4 is a diagram to show an example of association between a serving cell and a candidate cell.
[FIG. 5] FIG. 5A is a diagram to show a first example of option 2 for candidate cell configuration. FIG. 5B is a diagram to show a second example of option 2 for the candidate cell configuration.
[FIG. 6] FIG. 6 is a diagram to show example 1 of serving cell switching.
[FIG. 7] FIG. 7 is a diagram to show example 2 of serving cell switching.
[FIG. 8] FIG. 8 is a diagram to show example 3 of serving cell switching.
[FIG. 9] FIG. 9 is a diagram to show an outline of L1L2-triggered mobility (LTM).
[FIG. 10] FIG. 10 is a diagram to show a PDCCH indication-based RACH (PDCCH ordered RACH) with random access response (RAR) monitoring for a serving cell.
[FIG. 11] FIG. 11 is a diagram to show a PDCCH indication-based RACH (PDCCH ordered RACH) without random access response (RAR) monitoring for a candidate cell.
[FIG. 12] FIG. 12A and FIG. 12B show examples of a unified/common TCI framework.
[FIG. 13] FIG. 13 is a diagram to show an example of a TCI state information element (or RRC parameter).
[FIG. 14] FIG. 14 is a diagram to show an example of an RS to be a QCL source.
[FIG. 15] FIG. 15A to FIG. 15C are diagrams to show examples of QCL rules.
[FIG. 16] FIG. 16 is a conceptual diagram to show an example of a method of determining a TCI state switching delay according to a first embodiment.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (TCI, Spatial Relation, QCL)

For NR, control of reception processing (for example, at least one of reception, de-mapping, demodulation, or decoding) and transmission processing (for example, at least one of transmission, mapping, precoding, modulation, or coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

As described above, it is studied that the UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to, for example, inter-cell mobility for multi-TRP, but may be a scenario not corresponding to inter-cell mobility for multi-TRP.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

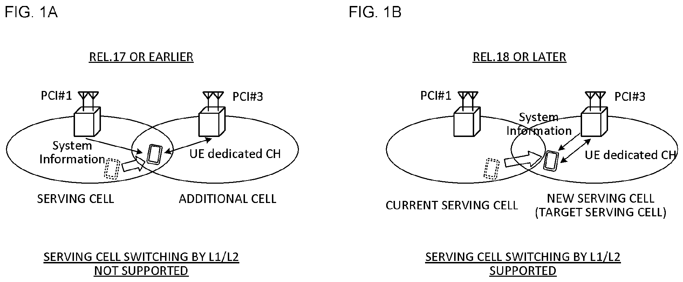

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). The UE can receive/transmit a UE-dedicated channel/common channel from/to a new serving cell (or a target serving cell). The UE may go out of the coverage of the current serving cell.

### <L1L2-Triggered Mobility (LTM) Procedure>

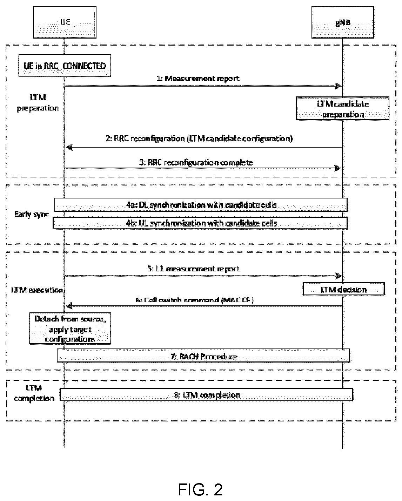

FIG. 2 is a diagram to show an example of LTM procedure. Note that L1/L2 inter-cell mobility and L1L2-triggered mobility (LTM) may be interchangeably interpreted. Note that the procedure of FIG. 2 is procedure corresponding to scenario 2 above. Respective procedures of FIG. 2 will be described in detail below.
1: The UE transmits, to a base station (gNB), a "MeasurementReport" message after RRC connection. The gNB determines to use LTM, based on MeasurementReport, and starts to prepare candidate cells.
2: The gNB transmits, to the UE, an "RRCReconfiguration" message including an LTM candidate cell configuration for one or a plurality of candidate cells.
3: The UE stores the received LTM candidate cell configuration, and transmits, to the gNB, an "RRCReconfigurationComplete" message.
4a/4b: Before receiving a cell switch command, the UE performs DL/UL synchronization with the candidate cells and acquires a timing advance (TA).
5: The UE performs L1 measurement for the configured candidate cells, and transmits, to the gNB, a measurement report in a lower layer (physical layer, L1). Note that the UE may transmit the measurement report to the gNB before the UL synchronization with the candidate cells. This step 5 may be performed during step 4a/4b described above. Between steps 4b and 5, TCI state activation may be performed between the UE and the current serving cell.
6: The gNB determines to perform cell switching to a target cell, and transmits, to the UE, a MAC CE for triggering cell switching, the MAC CE including a candidate configuration index of the target cell. This switches a cell configuration for the UE to a configuration of the target cell.
7: When cell switching is required to include random access procedure, the UE performs random access procedure for the target cell. Note that the UE may perform random access procedure in response to a RACH procedure request from the gNB.
8: The UE notifies the gNB that cell switching to the target cell has been completed successfully.

Note that the UE may perform, for the next LTM cell switching, steps 4 to 8 above a plurality of times, based on the LTM candidate cell configuration received in step 2.

### <Reduction of Interruption Time>

In Rel-18 L1/L2 inter-cell mobility (for example, scenario 2 above), the UE can reduce a time without data transmission (interruption time). Applying Rel-18 LTM can reduce the time without data transmission (interruption time) as compared with a method of handover based on an L3 measurement result (L3 handover). Respective specific processings will be described below.

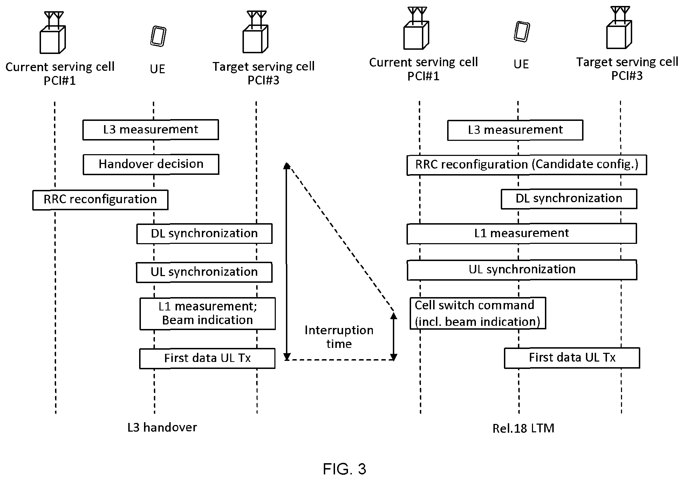

FIG. 3 is a diagram to show an example of comparison between the L3 handover and the Rel-18 LTM. In a case of the L3 handover, the UE first performs L3 measurement, and determines to perform handover, based on a result of the measurement. Then, the UE and a current serving cell perform RRC reconfiguration. Then, the UE performs DL synchronization and UL synchronization with a target serving cell. The UE performs L1 measurement/reporting for the target serving cell, and transmits the first UL data to the target serving cell after receiving a beam indication. In this case, the UE does not perform UL data transmission during the period from the determination of the handover to the transmission of the first UL data (interruption time).

In a case of the Rel-18 LTM, the UE first performs L3 measurement. Then, the UE, the current serving cell, and the target serving cell perform RRC reconfiguration. Then, the UE performs DL synchronization with the target serving cell. Then, the UE performs L1 measurement/reporting for the current serving cell and the target serving cell, and performs UL synchronization. Then, the current serving cell transmits, to the UE, a cell switch command (including a beam indication) via L1/L2 (DCI/MAC CE). Then, the UE transmits the first UL data to the target serving cell. In this case, the period from reception of the cell switch command to the transmission of the first UL data is an interruption time for the UL transmission, but the interruption time is shorter than that of the case of the L3 handover.

### (Configuration of Plurality of Candidate Cells)

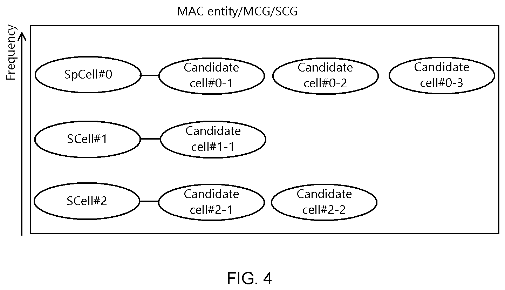

FIG. 4 is a diagram to show an example of association between the serving cell and a candidate cell. Assume that SpCell #0, SCell #1, or SCell #2 is the serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this manner, one or more candidate cells (candidate serving cells) may be associated with the serving cell.

For configuration of cells as candidates (candidate cells) when the serving cell is changed, options 1 and 2 below are considered, for example.

### <Option 1>

As in inter-cell mobility of Rel. 17, information in a serving cell configuration (ServingCellConfig) may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added below the serving cell configuration (ServingCellConfig) to add PCI configuration information. mimoParam-r17 may include additionalPCI-ToAddModList-r17 as an information list of additional SSBs having PCIs different from a PCI of the serving cell. The same configuration as that for the serving cell may be applied to the candidate cells (additional cells, cells with additionalPCI), except for some information.

### <Option 2>

A plurality of candidate cells may be provided with a full configuration (for example, ServingCellConfig) corresponding to the respective cells, and may be associated with each serving cell by reusing a carrier aggregation (CA) configuration framework. In other words, the candidate cells may not share configuration information with the serving cell, and may be provided with another configuration. The UE is provided with a full configuration for the respective candidate cells, and thus can perform appropriate communication with the candidate cell.

The CA configuration framework can configure an SpCell and add a plurality of SCells, for each cell group. Reusing the CA framework may configure a serving cell and configure a plurality of candidate cells, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is considered that this method is beneficial for reducing complexity of UE operation.

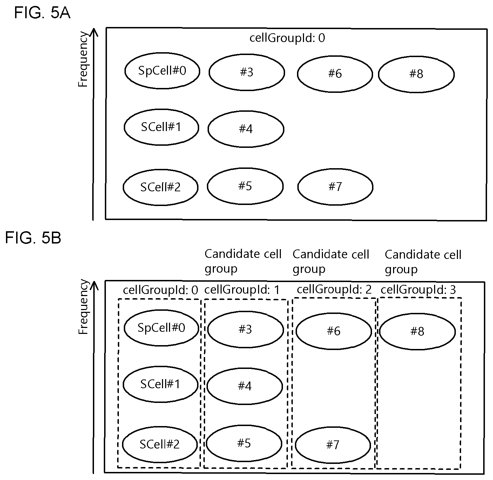

FIG. 5A is a diagram to show a first example of option 2 for the candidate cell configuration. In the example of FIG. 5A, a common candidate cell pool for cell switching in an MCG/SCG is applied to candidate cells. In other words, the candidate cells are handled as one pool (group) irrespective of a frequency band.

FIG. 5B is a diagram to show a second example of option 2 for the candidate cell configuration. In the example of FIG. 5B, a plurality of cell groups are configured, and cell group switching can be performed by L1/L2 signaling. Candidate cell(s) is configured for each cell group, and a configuration of each group includes indices of corresponding SpCell and SCell.

### (Signaling for Serving Cell Change Indication)

Implicit or explicit signaling for serving cell change indication will be described.

### {Aspect 1}

In aspect 1, implicit signaling for serving cell change indication will be described.

### {{Option 1-1}}

When a specific control resource set (CORESET) (for example, at least one of CORESET #0, a CORESET with a CH5 Type 0-CSS, and a CORESET with a CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may determine to change the serving cell to another cell (cell x, cell having a different PCI). In other words, this activation may implicitly indicate that the serving cell is changed to another cell.

In this case, the UE may update, to the same TCI state as the activated TCI state above, a beam for another CORESET ID, another CORESET using CH6/CH7/CH8, or another CORESET using a CSS.

### {{Option 1-2}}

In a case where, when the MAC CE activates/deactivates PDSCH TCI states, all the TCI states activated by the MAC CE are associated with same cell x having a PCI different from the PCI of the serving cell, the UE may determine to change the serving cell to another cell (cell x). In other words, this association may implicitly indicate that the serving cell is changed to another cell.

In a case where this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

### {{Option 1-3}}

In a case where the MAC CE activates/deactivates unified TCI states (corresponding to a unified TCI framework of Rel. 17, for example) and where all the activated unified TCI states are associated with same cell x having a different PCI, the UE may determine to change the serving cell to another cell (cell x). In other words, this association may implicitly indicate that the serving cell is changed to another cell.

### {Aspect 2}

In aspect 2, explicit signaling for serving cell change indication will be described. Scenario 2 described above is applied to aspect 2, for example.

### {{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of a serving cell may be interchangeably interpreted.

The UE may receive a new MAC CE used for activation/deactivation of a non-serving cell and including at least one of fields (information) indicating (1) to (3) below corresponding to a non-serving cell. The UE may, when receiving the MAC CE, determine to change the serving cell to another cell (non-serving cell). The UE may control, based on the information, DL/UL signal transmission and reception to and from the non-serving cell. Note that the non-serving cell may be one or a plurality of non-serving cells. In the example to be described below, a MAC CE including a plurality of fields indicating a plurality of non-serving cell indices is applied.
(1) Serving cell ID.
(2) BWP ID.
(3) Non-serving cell ID used for activation. The non-serving cell ID may be replaced with any information (with which the non-serving cell can be identified) corresponding to the non-serving cell.

As an example of (3), any one of (3-1) to (3-5) may be applied, for example.
(3-1) PCI (PCI to be directly used). For example, 10 bits are used.
(3-2) Re-indexing index (new ID) of non-serving cell. The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. A size (the number of bits) of the bitmap may be the same as the number of non-serving cells configured in this CC. For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, so that the UE can recognize, in a target cell (serving cell after change), a DL beam to be monitored. By using the TCI state/SSB/CSI-RS, the UE may create a beam report (CSI report) and transmit the created report.

### {{Option 2-2}}

The UE may receive a MAC CE obtained by adding a new 1-bit field "C" to an existing MAC CE. The field indicates whether change of a serving cell is performed. The UE may receive the MAC CE, and may determine, based on the field, whether to change the serving cell to another cell.

### {{Option 2-3}}

For the MAC CE in option 2-2, the MAC CE may further include a field indicating a serving cell index/PCI/another ID (the above-described new ID of option 2-1 or the like), or a field for a TCI state/SSB/CSI-RS for a target cell (serving cell after change).

In this manner, indication for serving cell change indication is indicated by a MAC CE/DCI, thereby allowing the UE to appropriately change a serving cell.

### {Example 1 of Serving Cell Switching}

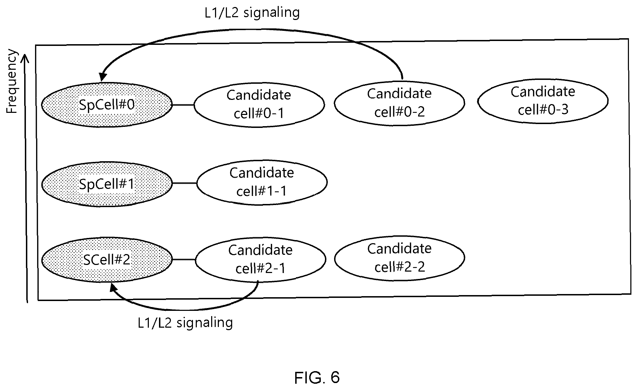

FIG. 6 is a diagram to show example 1 of the serving cell switching. For example, when L1/L2 signaling indicates, in a serving cell "SpCell #0" in an MCG/SCG, that the serving cell is changed to candidate cell #0-2, candidate cell #0-2 becomes a new serving cell "SpCell #0." For example, when L1/L2 signaling indicates, in a serving cell "SCell #2" in an MCG/SCG, that the serving cell is changed to candidate cell #2-1, candidate cell #2-1 becomes a new serving cell "SCell #2."

### {Example 2 of Serving Cell Switching}

RRC/MAC CE may configure a global candidate cell ID (cell #3, ..., 8) for each cell group, band, FR, or UE. The global candidate cell ID may indicate serving cell switching to the UE.

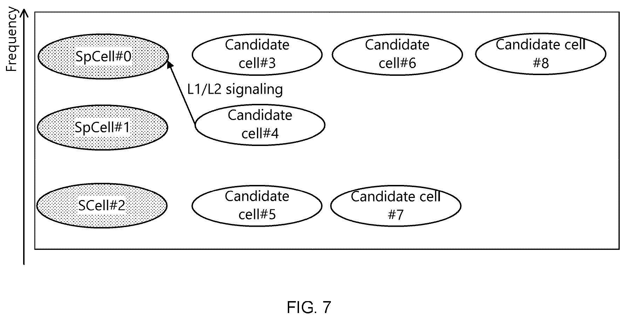

FIG. 7 is a diagram to show example 2 of the serving cell switching. As in FIG. 5A, a pool of a plurality of candidate cells can be configured, and L1/L2 signaling can switch a serving cell to any (activated) candidate cell in the pool. In this case, the configured candidate cell can become either an SpCell or an SCell, based on the L1/L2 signaling.

The UE may receive an indication of serving cell change (from cell #2-1 to candidate cell #4) via a MAC CE/DCI. Indicated candidate cell #4 becomes an SpCell in a new cell group (MCG/SCG).

### {Example 3 of Serving Cell Switching}

RRC/MAC CE may configure a cell group. The UE may perform serving cell switching, based on switching of the cell group.

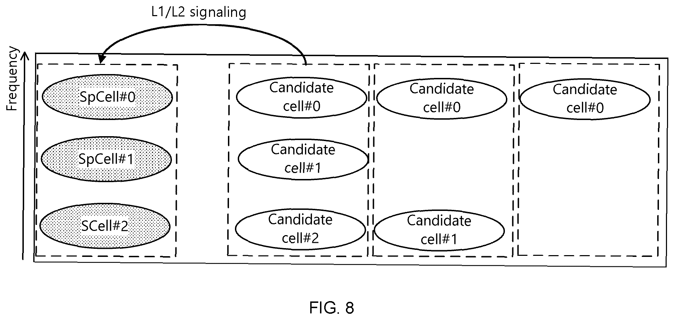

FIG. 8 is a diagram to show example 3 of the serving cell switching. The UE receives an indication of change of a cell group including a serving cell (change to candidate cell group #1), via a MAC CE/DCI. A cell included in indicated candidate cell group #1 becomes a new serving cell (SpCell, SCell). For example, candidate cells #0, #1, and #2 included in indicated candidate cell group #1 become new SpCell #0, SCell #1, and SCell #2, respectively. In other words, the serving cell group is switched.

### (Outline of L1L2-Triggered Mobility (LTM))

In L1L2-triggered mobility (LTM) supported by Rel. 18 or later versions, L1 inter-frequency measurement may be supported. Also, DL synchronization/UL synchronization in a candidate cell based on at least an SSB may be supported prior to a cell switch command.

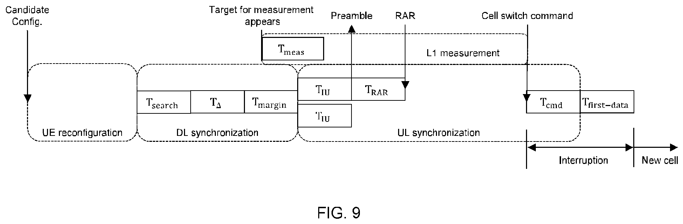

FIG. 9 is a diagram to show an outline of the L1L2-triggered mobility (LTM). LTM and L1/L2 inter-cell mobility may be interchangeably interpreted.

The UE receives, from the NW, candidate cell configurations in UE reconfiguration. The UE reconfiguration includes T_{RRC}, and T_{proccesing1/Tproccesing2}. T_{RRC} (for example, up to 10 ms) is a processing time for RRC reconfiguration that delivers candidate cell configurations (candidate configurations). T_{proccesing1/Tproccesing2} (for example, up to 20 ms for the same FR, up to 40 ms for different FRs) are times for respective UE processings before and after a cell switch command. This may include, for some cases, L2/3 reconfiguration, RF re-tuning, baseband re-tuning, security update, if necessary, and the like.

DL synchronization includes T_{search}, T_{Δ}, and T_{margin}. T_{search} (for example, 0 ms in a case where a cell is known, up to 60 ms in a case where a cell is unknown) is a time necessary for a target cell search. T_{Δ} is a time for fine tracking and all timing information acquisition. T_{margin} (for example, up to 2 ms) is a time for post-processing of an SSB and a CSI-RS.

L1 measurement (mesurement) includes Tₘₑₐₛ (SMTC periodicity, (for example, 20 ms)). Tₘₑₐₛ is measurement latency from the appearance of a target to a cell switch command.

UL synchronization includes T_{IU}, T_{RAR}, and T_{cmd}. T_{IU} (for example, up to 15 ms) is a time for uncertain interruption in acquisition of the first available PRACH occasion in a new cell. T_{RAR} (for example, up to 4 ms) is a time for RAR latency. T_{cmd} (for example, up to 5 ms) is a time for processing of L1/L2 command (HARQ and paging).

T_{first-data} after T_{cmd} is a time for the UE to perform, after an RAR, the first DL reception/UL transmission on an indicated beam of a target cell.

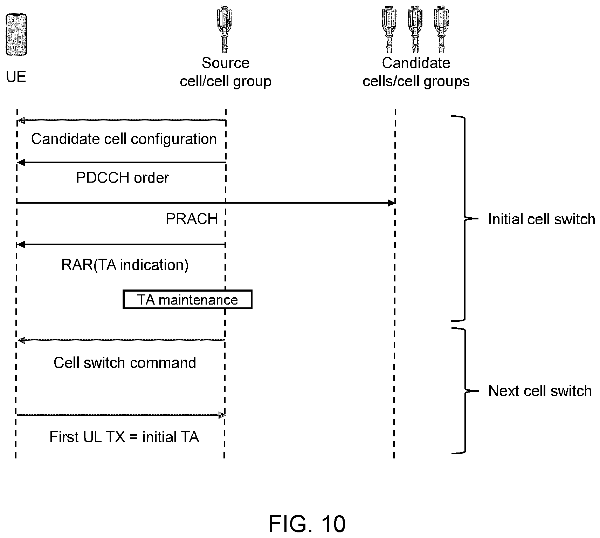

FIG. 10 is a diagram to show an example of a PDCCH order-based RACH (PDCCH ordered RACH) with RAR monitoring. Note that, in the present disclosure, a source cell and a source cell group may be interchangeably interpreted. A candidate cell and a candidate cell group may be interchangeably interpreted.

The source cell may transmit, to the UE, information related to configuration of a candidate cell (for example, candidate cell configuration information). The source cell may transmit, to the UE, a PDCCH order (for example, DCI format 1_0) used to trigger a PRACH. The PDCCH order (or DCI) may indicate a candidate cell (for example, one candidate cell)/random access occasion (RO) as a target of a PRACH trigger/transmission. The UE transmits, based on the PDCCH order, a PRACH in a RACH procedure to the candidate cells, for TAG/TA acquisition.

Next, the source cell transmits, to the UE, a response signal (RAR) to the PRACH. The RAR may include information related to a TA (for example, TA indication). The RAR (for example, a PDSCH including the RAR/a PDCCH for scheduling the PDSCH) may be monitored in a specific search space (for example, a common search space (CSS)) of a specific cell (for example, an SpCell) among current serving cells (only in a Distributed Unit (DU)). In the source cell, TA adjustment (for example, TA maintenance) is performed.

Next, the source cell may transmit a cell switch command to the UE. TA information may be moved/notified from the source cell to a target cell. The UE may control, based on the acquired TA, UL transmission after cell switching. For example, the UE may perform the first UL transmission by using an initial TA when UL synchronization of all candidate cells is not completed after an initial cell switch.

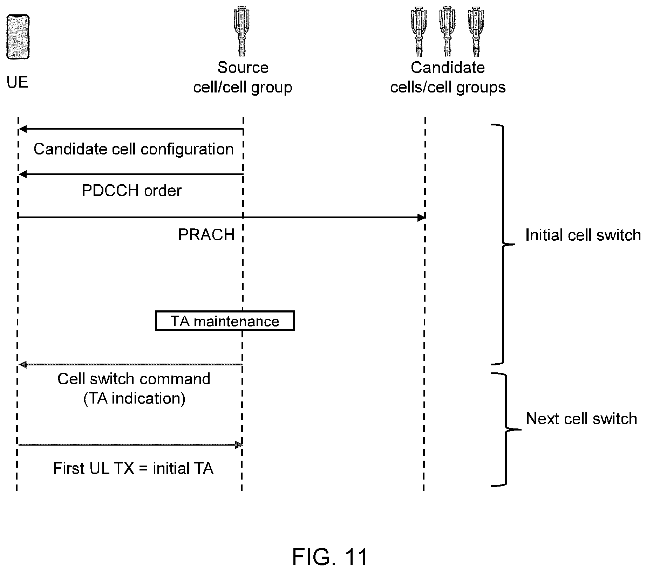

FIG. 11 is a diagram to show an example of a PDCCH order-based RACH (PDCCH ordered RACH) without RAR monitoring. Only the difference between FIG. 11 and FIG. 10 will be described.

In the example of FIG. 11, a PDCCH order used to trigger a PRAH may indicate one or more candidate cells (for example, a plurality of candidate cells)/random access occasions as a target of a PRACH trigger/transmission. The UE may transmit, based on the PDCCH order, a PRACH in a RACH procedure to the candidate cells, for acquisition of a plurality of TAGs/TAs. The source cell does not transmit a response signal (for example, RAR) to the PRACH. The source cell may indicate, to the UE, information related to a TA (for example, TA indication) by using a cell switch command.

In the present disclosure, a RACH without RAR and a RACH without RAR monitoring may be interchangeably interpreted. A RACH may be interpreted as PRACH transmission triggered by a PDCCH order. RACH procedure/PRACH transmission without RAR monitoring may be interpreted as RACH procedure/PRACH transmission not requiring RAR monitoring, or RACH procedure/PRACH transmission in which RAR monitoring is not requested.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated to the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated to the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated to the UE.

For example, description "N = M = 1" may mean that one TCI state common to UL and DL is notified/configured/indicated to the UE, the TCI state being for a single TRP (joint TCI state for a single TRP).

For example, description "N = 1, M = 1" may mean that one UL TCI state and one DL TCI state for a single TRP are separately notified/configured/indicated to the UE (separate TCI state for a single TRP).

For example, description "N = M = 2" may mean that a plurality of (two) TCI states common to UL and DL are notified/configured/indicated to the UE, the plurality of TCI states being for a plurality of (two) TRPs (joint TCI states for a plurality of TRPs).

For example, description "N = 2, M = 2" may mean that a plurality of (two) UL TCI states and a plurality of (two) DL TCI states for a plurality of (two) TRPs are notified/configured/indicated to the UE (separate TCI states for a plurality of TRPs).

Note that the above examples describe cases where N and M values are 1 or 2, but the N and M values may be 3 or more, and N and M may be different from each other.

For Rel. 17, support of N = M = 1 is under study. For example, indication of one common beam with RRC/MAC CE/DCI may be supported, and the one common beam may be applied to a plurality of DL/UL channels/reference signals. For Rel. 18 or later versions, another case may be supported.

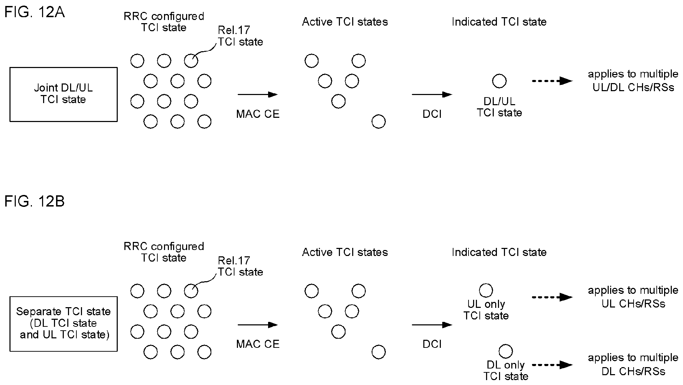

FIG. 12A and FIG. 12B show examples of the unified TCI framework. FIG. 12A shows an example of a joint DL/UL TCI state, and FIG. 12B shows an example of a separate TCI state (for example, Separate TCI (DL TCI state and UL TCI state)).

In the example of FIG. 12A, an RRC parameter (information element) configures a plurality of TCI states for both DL and UL. In the present disclosure, the TCI states configured by the RRC parameter may be referred to as configured TCI states. The MAC CE may activate a plurality of TCI states among the plurality of configured TCI states. DCI may indicate one of the plurality of activated TCI states. In the present disclosure, the TCI state indicated by the DCI may be referred to as an indicated TCI state.

The DCI may be UL DCI (for example, DCI used to schedule a PUSCH) or DL DCI (for example, DCI used to schedule a PDSCH). The indicated TCI state may be applied to at least one (or all) of UL/DL channels/RSs. One piece of DCI may indicate both UL TCI and DL TCI.

In the example of FIG. 12A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example of FIG. 12B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using TCI state operation (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR or later versions, it is assumed that beam activation/indication for TCI states associated with different physical cell identifiers (PCIs) is supported by a MAC CE/DCI. In Rel-18 NR or later versions, it is assumed that indication of serving cell change for cells including different PCIs is supported by a MAC CE/DCI.

The TCI state (for example, joint DL/UL TCI state) configuration/indication method of FIG. 12A and the TCI state (for example, separate TCI state) application configuration/indication method of FIG. 12B may be switched to each other and may be applied. Which of the joint DL/UL TCI state or the separate TCI state is to be applied may be configured from a base station to the UE via a higher layer parameter.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state or a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE determines the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE determines the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 or later versions, a TCI state related to CORESET #0 is under study.

For example, in the unified TCI state framework of Rel. 17 or later versions, for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management usage and an A/SP/P-SRS for codebook (CB)/non-codebook (NCB)/antenna switching usage, the indicated TCI state is applied to the SRS resource set. A configured TCI state in the SRS resource set is applied to another SRS.

### (Active DL TCI State Switch (Switching) Delay for Unified TCI State)

An active DL TCI state switching delay requirement for a unified TCI state may be applied to a UE configured with a parameter (DLorJoint-TCIState) for a DL channel in a serving cell.

The requirement may also be applied to all serving cell lists, "simultaneousU-TCI-UpdateList1," "simultaneousU-TCI-UpdateList2," "simultaneousU-TCI-UpdateList3," and "simultaneousU-TCI-UpdateList4" in MR-DC/standalone NR, provided that all the serving cells in a list are configured with the same serving cell and BWP in a parameter (unifiedTCI-StateRef-r17).

The UE is required to complete active DL TCI state switch within a delay time (TCI state switching delay).

In a case where a target DL TCI state indicates an additional PCI different from a PCI of a configured serving cell, the requirement may be applied when the following conditions are satisfied.
- An active BWP of the serving cell is the same as that of a cell with the additional PCI.
- A center frequency, SCS, and SFN offset of the cell with the additional PCI are the same as those of the serving cell.
- The cell with the additional PCI is known to the UE.

The cell with the additional PCI may be known when the following conditions are satisfied.
- In the last 5 seconds before a measurement value of L1-RSRP is configured, the UE has transmitted a valid L3 measurement report to the cell with the additional PCI.
- A timing offset between the serving cell and the cell with the additional PCI is within a CP with a corresponding SCS.

Otherwise (when these conditions are not satisfied), the cell with the additional PCI is unknown.

A MAC CE-based downlink TCI state switching delay requirement is applied to DL TCI state switching by using a frame for unified TCI state (separate DL TCI state/joint TCI state) switching.

When a source RS with a DL TCI state/joint TCI state is associated with a PCI different from that of the serving cell, the present requirement is applied if a cell with the different PCI satisfies the conditions for the known cell described above. When the conditions for the known cell are not satisfied, a longer delay may be expected.

In a case of joint TCI state switching, unless a target PL-RS is maintained, the UE is not expected to perform DL reception based on a target TCI state before completing DL TCI state and UL TCI state switching.

When the target TCI state is known, if the UE receives, in slot n, a PDSCH delivering (including) a MAC CE activation command, the UE can receive, in the first slot after a certain slot, a UE-dedicated PDCCH/PDSCH by applying the target TCI state for the serving cell with occurrence of TCI state switching.

Here, the certain slot described above may be the (n + T_{HARQ} + 3Nₛₗₒₜ^{subframe,µ} + TOₖ * (T_{first-SSB} + T_{SSB-proc})/NR slot length) th slot.

The UE can receive a UE-dedicated PDCCH/PDSCH in the first to (n + T_{HARQ} + 3Nₛₗₒₜ^{subframe,µ})-th slots by applying a previous TCI state. Here, T_{HARQ} in the certain slot is a timing between DL data transmission and acknowledgement.

Also,
- T_{first-SSB} is a time for the first SSB transmission after a MAC CE to be decoded by the UE. The SSB corresponds to QCL type A/type C for the target TCI state.
- T_{SSB-proc} is, for example, 2 ms (milliseconds).
- TOₖ is 1 when there is not the target TCI state in a list of active TCI states for the PDSCH/PDCCH, and otherwise is 0.

### (QCL rules for TCI states)

As described above, in Rel. 18 or later versions, support of L1/L2 inter-cell mobility (for example, L1L2-triggered mobility (LTM)) is assumed. In this case, it is assumed that each TCI state including up to two QCL types (for example, qcl-types) and a source RS of each QCL type in TCI state QCL information (for example, QCL-Info) are provided based at least on RS configuration for LTM.

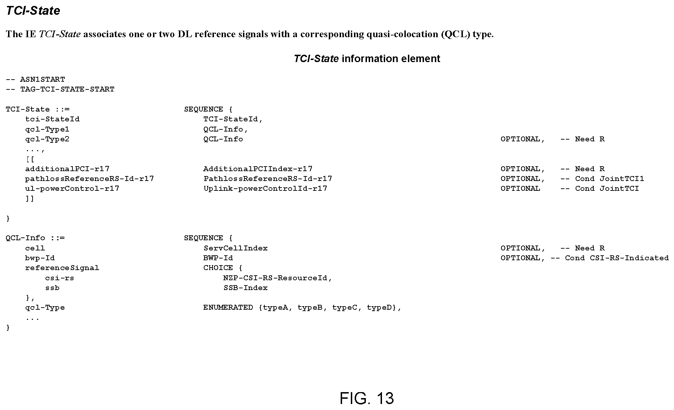

FIG. 13 is a diagram to show an example of a TCI state information element (for example, TCI-State information element) supported by Rel. 17 or earlier versions. By the TCI state information element (or RRC parameter), one or two DL reference signals may be associated with a corresponding QCL type.

It is also assumed that in LTM supported by Rel. 18, an SSB is used for L1 measurement/L1 beam reporting for a candidate cell (for example, a non-serving cell before reception of a cell switch command) (for example, only SSB-based L1 measurement/L1 beam reporting is supported). Alternatively, it is also assumed that in the LTM, CSI-RS measurement for a candidate cell is additionally supported.

For Rel. 15 to Rel. 17, an SSB is not supported to be configured as a QCL source (or QCL source RS) with a TCI state for PDCCH/PDSCH. In Rel. 15 to Rel. 17, a TRS/CSI-RS can be configured as a QCL source for a PDCCH/PDSCH DMRS, and an SSB can be configured as a QCL source for the TRS/CSI-RS.

It is assumed that in LTM of Rel. 18 or later versions, a TCI state (for example, at least one of each TCI state including up to two QCL types (pcl-types) and a source RS of a QCL type with a TCI state) is provided based on RS configuration for LTM, but studies have not sufficiently been made on a TCI state supported for a candidate cell. Unless such a TCI state for a candidate cell (for example, a QCL type/source RS of a QCL type, or the like) is appropriately applied, degradation in communication quality and the like may occur.

The QCL rules when a synchronization signal block (for example, an SSB) cannot be configured as a TCI state for a DMRS of a certain DL channel may be as follows.

The certain DL channel may be at least one of a PDCCH and a PDSCH. The description below describes a PDCCH/PDSCH as an example of the certain DL channel, but is not limited to this.

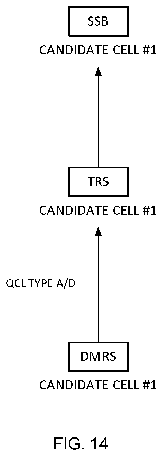

When an SSB cannot be configured as a TCI state for a PDCCH/PDSCH DMRS (or the SSB cannot be a QCL source for the PDCCH/PDSCH DMRS), a TRS/CSI-RS may be a QCL source for the PDCCH/PDSCH DMRS, and the SSB may be a QCL source for the TRS/CSI-RS (see FIG. 14).

FIG. 14 shows an example of a case where for candidate cell #1, the TRS/CSI-RS is a QCL source for the PDCCH/PDSCH DMRS and the SSB is a QCL source for the TRS/CSI-RS. Candidate cell #1 may be a cell associated with a PCI different from a serving cell PCI.

In this case, at least one of QCL rule 1-1 to QCL rule 1-3 below may be applied/supported. In the present disclosure, the QCL rule may be interpreted as a case.

The UE may assume that a TCI state indicated from a network (for example, a base station) indicates one of the QCL types in QCL rule 1-1 to QCL rule 1-3. The TCI state indicated from the base station may be indicated via DCI/MAC CE/RRC. QCL rule 1-1 to QCL rule 1-3 may each be applied/supported for both (or one of) a case where a unified TCI state (for example, dl-OrJointTCI-StateList) is not configured and a case where a unified TCI state (for example, dl-OrJointTCI-StateList) is configured.

All or one or two of QCL rule 1-1 to QCL rule 1-3 may be supported. The QCL rules to be applied/supported may be defined in a specification or may be configured from the base station to the UE via an RRC parameter. The applicable QCL rules are not limited to this, and a QCL type A RS according to a certain QCL rule and a QCL type D RS according to another QCL rule may be applied in combination.

### {QCL Rule 1-1}

QCL rule 1-1 may be defined as follows.
QCL type A RS: A TRS (w/a different PCI)
QCL type D RS: The same CSI-RS resource as that of the QCL type A RS

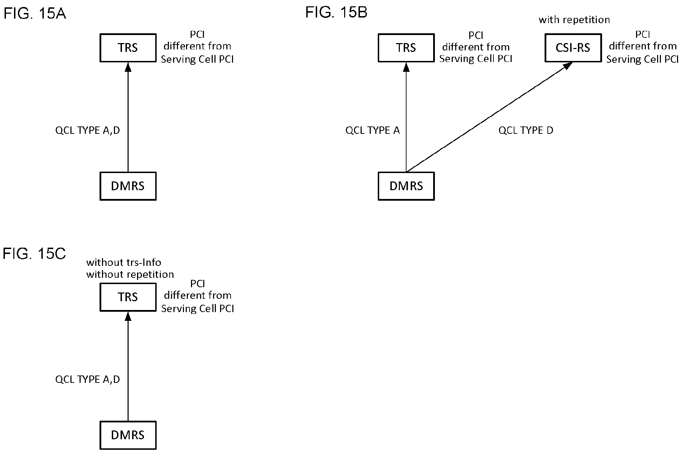

The RS corresponding to the QCL type A RS may be a CSI-RS configured with a certain higher layer parameter (for example, trs-Info) (or a CSI-RS in a CSI-RS resource set configured with trs-Info). The RS corresponding to the QCL type A RS may be configured to correspond to a PCI different from a serving cell PCI (for example, a PCI of a candidate cell/additional cell/non-serving cell) (see FIG. 15A). When LTM is configured/applied, RS resource configuration (for example, CSI-RS resource configuration) may be supported for each candidate cell.

For example, a reference RS (for example, a TRS/CSI-RS) corresponding to QCL type A/QCL type D may further be a CSI-RS with a PCI different from the serving cell PCI. In other words, as the reference RS (for example, the TRS/CSI-RS) corresponding to QCL type A/QCL type D, a CSI-RS with a PCI different from the serving cell PCI may be used in addition to (or in place of) a CSI-RS corresponding to the serving cell PCI.

The UE may assume that, when LTM is configured/applied, as quasi-co-location types of a TCI state (for example, TCI-State or indicated DLorJointTCIState) indicated from the base station, a TRS with a PCI different from the serving cell PCI (for example, QCL type A) and the same CSI-RS as that of QCL type A (for example, QCL type D) are indicated.

As an example, the type A RS and the type D RS according to QCL rule 1-1 may be defined as follows.
The type A RS may be a CSI-RS resource of a non-zero power CSI-RS resource set (for example, NZP-CSI-RS-ResourceSet) configured with a higher layer parameter (for example, trs-Info), the type D RS may be the same CSI-RS resource as that of the type A RS, and the reference RS may further be a CSI-RS with a PCI different from the serving cell PCI.

### {QCL Rule 1-2}

QCL rule 1-2 may be defined as follows.
QCL type A RS: A TRS (w/a different PCI)
QCL type D RS: A CSI-RS with repetition (w/a different PCI)

The RS corresponding to the QCL type A RS may be configured for a PCI different from a serving cell PCI (for example, a PCI of a candidate cell/additional cell/non-serving cell) (see FIG. 15B). When LTM is configured/applied, RS resource configuration (for example, CSI-RS resource configuration) may be supported for each candidate cell.

The RS corresponding to the QCL type D RS may be a CSI-RS configured with a higher layer parameter (for example, repetition) related to repetition.

For example, a reference RS (for example, a TRS/CSI-RS) corresponding to QCL type A/QCL type D may further be a CSI-RS with a PCI different from the serving cell PCI. In other words, as the reference RS (for example, the TRS/CSI-RS) corresponding to QCL type A/QCL type D, a CSI-RS with a PCI different from the serving cell PCI may be used in addition to (or in place of) a CSI-RS corresponding to the serving cell PCI.

In this case, when a plurality of (for example, two) reference RSs include a PCI different from that of the serving cell, the PCI different from that of the serving cell may be the same PCI. In other words, the two reference RSs (for example, resource RSs) may be configured to be associated with the same candidate cell (or non-serving cell). The two reference RSs may be an RS corresponding to a first QCL type (for example, QCL type A) and an RS corresponding to a second QCL type (for example, QCL type D).

The UE may assume that, when LTM is configured/applied, as quasi-co-location types of a TCI state (for example, TCI-State or indicated DLorJointTCIState) indicated from the base station, a TRS with a PCI different from the serving cell PCI (for example, QCL type A) and a CSI-RS corresponding to a PCI different from the serving cell PCI and configured with repetition are indicated.

As an example, the type A RS and the type D RS according to QCL rule 1-2 may be defined as follows.
The type A RS may be a CSI-RS resource of a non-zero power CSI-RS resource set (for example, NZP-CSI-RS-ResourceSet) configured with a higher layer parameter (for example, trs-Info), the type D RS may be a CSI-RS resource of a non-zero power CSI-RS resource set (for example, NZP-CSI-RS-ResourceSet) configured with a higher layer parameter "repetition," and the reference RS may further be a CSI-RS with a PCI different from the serving cell PCI. When both of the reference RSs include a PCI different from that of the serving cell, the PCI different from that of the serving cell may be the same PCI.

### {QCL Rule 1-3}

QCL rule 1-3 may be defined as follows.
QCL type A RS: A CSI-RS without trs-Info and repetition (w/a different PCI)
QCL type D RS: The same CSI-RS resource as that of the QCL type A RS

The RS corresponding to the QCL type A RS may be a CSI-RS not configured with a higher layer parameter (for example, trs-Info) related to trs and a higher layer parameter (for example, repetition) related to repetition. The RS corresponding to the QCL type A RS may be configured to correspond to a PCI different from a serving cell PCI (for example, a PCI of a candidate cell/additional cell/non-serving cell) (see FIG. 15C). When LTM is configured/applied, RS resource configuration (for example, CSI-RS resource configuration) may be supported for each candidate cell.

For example, a reference RS (for example, a TRS/CSI-RS) corresponding to QCL type A/QCL type D may further be a CSI-RS with a PCI different from the serving cell PCI. In other words, as the reference RS (for example, the TRS/CSI-RS) corresponding to QCL type A/QCL type D, a CSI-RS with a PCI different from the serving cell PCI may be used in addition to (or in place of) a CSI-RS corresponding to the serving cell PCI.

The UE may assume that, when LTM is configured/applied, as quasi-co-location types of a TCI state (for example, TCI-State or indicated DLorJointTCIState) indicated from the base station, a CSI-RS with a PCI different from the serving cell PCI (for example, QCL type A) and the same CSI-RS as that of QCL type A (for example, QCL type D) are indicated.

As an example, the type A RS and the type D RS according to QCL rule 1-3 may be defined as follows.
The type A RS may be a CSI-RS resource of a non-zero power CSI-RS resource set (for example, NZP-CSI-RS-ResourceSet) configured without a higher layer parameter (for example, trs-Info) and a higher layer parameter (for example, repetition), the type D RS may be the same CSI-RS resource as that of the type A RS, and the reference RS may further be a CSI-RS with a PCI different from the serving cell PCI.

In QCL rule 1-1 to QCL rule 1-3, the UE may assume that the center frequency, SCS, and SFN offset are the same for an SSB (or an SS/PBCH block) from the serving cell and an SSB with a PCI different from that of the serving cell. When inter-cell LTM (for example, inter-frequency LTM) is not supported, in QCL rules 1-1 to 1-3, the UE may not assume that the center frequency, SCS, and SFN offset are the same for an SSB (or an SS/PBCH block) from the serving cell and an SSB with a PCI different from that of the serving cell.

### (Analysis)

Incidentally, in LTM of Rel. 18, a TCI state for a target cell is included in a MAC CE for cell switch command. Here, an index of the TCI state is selected and notified, based on a TCI state previously activated by the MAC CE or a TCI state configured by RRC.

As described above, when a TCI state indicated by the MAC CE (indicated TCI state) is not (one of) previously activated TCI states, the UE uses (applies) a longer TCI state switching delay.

In other words, it is assumed that the time until the indicated TCI state is applied differs depending on the cases described above. Accordingly, it is necessary to study a direction of applying a TCI state switching delay depending on each case.

Unless application of the TCI state switching delay can be appropriately controlled, appropriate cell switching may fail, and throughput reduction/communication quality degradation may occur.

Thus, the inventors of the present invention studied a method of applying a TCI state switching delay, and came up with the idea of examples of the present embodiment.

Embodiments according to the present disclosure will be described in detail with reference to the drawings as follows. Note that the embodiments/aspects (for example, respective cases) to be described below may each be used individually, or at least two of the embodiments/aspects may be employed in combination.

### (Various Interpretations and so on)

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a cell, a PCI, a serving cell, an SpCell, a source serving cell (source cell), a reference/reference cell, a CC, a BWP, a BWP in a CC, and a band may be interchangeably interpreted. In the present disclosure, an additional cell, another cell, a non-serving cell, a cell having a different PCI, a candidate cell, a candidate serving cell, a cell having a PCI different from a PCI of a current serving cell, another serving cell, a target cell, a target serving cell, and a neighbour cell may be interchangeably interpreted. In the present disclosure, switching, change, and update may be interchangeably interpreted. A serving cell may be interpreted as a serving cell before switching or a serving cell after switching. LTM application, cell application, and cell switch may be interchangeably interpreted. LTM application, beam application, and beam switch may be interchangeably interpreted.

In the present disclosure, a RACH resource, an RA resource, a PRACH preamble, an occasion, a RACH occasion (RO), a PRACH occasion, a repetition resource, a repetition configuration resource, a resource configured for an RO/repetition, a time instance and a frequency instance, a time resource and a frequency resource, an RO/preamble resource, a repetition, a PRACH resource, a time/frequency resource for PRACH, a preamble configuration/index, a mask configuration/index, and a PRACH configuration may be interchangeably interpreted.

In the present disclosure, a candidate cell and a candidate cell group may be interchangeably interpreted. A candidate cell in the present disclosure may be a candidate cell indicated in a PDCCH order. A PDCCH order and DCI (for example, DCI format 1_0) may be interchangeably interpreted. In the present disclosure, an RO, an RO index, and RO # may be interchangeably interpreted.

The description below may be applied to inter-cell mobility (for example, L1/L2 inter cell mobility) or to communication control other than the inter-cell mobility. L1/L2 inter-cell mobility may be interpreted as at least one of cell switching, cell switch, and cell change.

### (Radio Communication Method)

In the present disclosure, a UE is indicated with one or a plurality of TCI states (IDs) in a MAC CE for cell switch command, and is required to use (apply) the indicated TCI state(s) after cell switching. Here, the TCI states (IDs) are based on a list of TCI states configured by RRC in a target cell or another cell (serving cell/another candidate cell).

A NW (gNB) can activate/deactivate a TCI state for one or a plurality of candidate cells before a cell switch command.

An active TCI state in the target cell (new cell indicated by the cell switch command) may or may not be present.

Here, different TCI state switching delays may be assumed depending on whether the indicated TCI state is activated.

In the present disclosure, cases 1 to 2 below may be assumed.

### <Case 1>

Before the cell switch command indicating the target cell, the UE includes or does not include an active TCI state in the target cell, for some cases.

### <Case 2>

Before the cell switch command indicating the target cell, the UE is required to include an active TCI state in the target cell. In this case, the NW (gNB) is required to activate a TCI state in the target cell before the cell switch command for the target cell.

The embodiments of the present disclosure can be broadly classified as follows.
- First embodiment: A method of determining a TCI state switching delay
- Second embodiment: An SSB or a TRS/CSI-RS as a QCL source of a TCI state

### <First Embodiment>

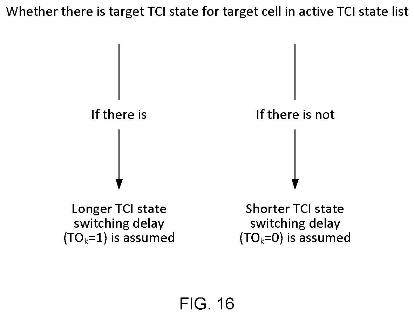

The first embodiment describes a method of determining a TCI state switching delay. FIG. 16 is a conceptual diagram to show an example of the method of determining the TCI state switching delay according to the first embodiment.

For switching from a TCI state for a source cell (for example, a serving cell) to a TCI state for a target cell, the TCI state switching delay may be determined based on the following equation.

When a target TCI state is known, if the UE receives, in slot n, a PDSCH delivering (including) a MAC CE activation command, the UE can receive, in the first slot after a certain slot, a UE-dedicated PDCCH/PDSCH by applying the target TCI state for the serving cell with occurrence of TCI state switching.

Here, the certain slot described above may be the (n + T_{HARQ} + 3Nₛₗₒₜ^{subframe,µ} + TOₖ * (T_{first-SSB} + T_{SSB-proc})/NR slot length) th slot.

The UE can receive a UE-dedicated PDCCH/PDSCH in the first to (n + T_{HARQ} + 3Nₛₗₒₜ^{subframe,µ})-th slots by applying a previous TCI state. Here, T_{HARQ} in the certain slot is a timing between DL data transmission and acknowledgement.

Also,
- T_{first-SSB} is a time for the first SSB transmission after a MAC CE to be decoded by the UE. The SSB corresponds to QCL type A/type C for the target TCI state.
- T_{SSB-proc} is, for example, 2 ms (milliseconds).

TOₖ is 1 when there is not the target TCI state in an active TCI state list for the PDSCH/PDCCH, and otherwise is 0.

More specifically, TOₖ is 1 when there is not the target TCI state for the target cell in an active TCI state list for the PDSCH/PDCCH for the target cell/LTM, and otherwise is 0 (see FIG. 16).

Here, the active TCI state list for the PDSCH/PDCCH may be interpreted as an active TCI state list for an indicated TCI state or an active TCI state list for a unified TCI state, and vice versa.

When there is not the target TCI state for the target cell in the active TCI state list, the target TCI state for the target cell may be directly activated and indicated by a MAC CE for cell switch command. In this case, the UE may assume a longer switching delay (TOₖ = 1) (see FIG. 16).

When there is the target TCI state for the target cell in the active TCI state list, before the UE receives a MAC CE for cell switch command, the target TCI state for the target cell may be activated by an existing MAC CE (for example, a Rel-17 MAC CE for activation/deactivation of a unified TCI state or DCI) and indicated by the MAC CE for cell switch command. In this case, the UE may assume a shorter switch delay (TOₖ = 0) (see FIG. 16).

In this manner, the UE can determine/judge a TCI state switching delay (TOₖ = 0/1) to be applied, based on whether there is the target TCI state in the active TCI state list (see FIG. 16).

Note that the UE may receive, in slot n, a PDSCH including the MAC CE for cell switch command.

The UE can receive a UE-dedicated PDCCH/PDSCH or a UE-common PDCCH/PDSCH by applying the target TCI state for the target cell indicated in the MAC CE for cell switch command.

In the present disclosure, the TCI state for the target cell may mean a TCI state configuration for an SpCell/serving cell or a TCI state configuration for LTM.

### <Supplements>

At least one of options 1 to 2 below may be applied to candidate cells for LTM at different frequencies.

### <Option 1>

A candidate cell for LTM at a frequency different from that of the serving cell may be handled only as an unknown cell.

### <Option 2>

A new condition may be defined for a candidate cell for LTM at a frequency different from that of the serving cell.

According to the first embodiment described above, the UE can appropriately determine/judge a TCI state switching delay depending on a case.

### <Second Embodiment>

The second embodiment describes an SSB or a TRS/CSI-RS as a QCL source of a TCI state.

In the present disclosure, a QCL source, an SSB, and a TRS/CSI-RS may be interchangeably interpreted.

Which of an SSB or a TRS/CSI-RS is to be supported as a QCL source of a TCI state is under study.

For example, a UE is not required to monitor the TRS/CSI-RS for a candidate cell before a cell switch command. However, the UE has reported SSB-based L1-RSRP for the candidate cell, and thus has already measured an SSB for a target cell.

Accordingly, at the time point of the cell switch command, the UE has already measured the SSB for the target cell. On the other hand, the UE has not yet measured a TRS/CSI-RS for the target cell.

When the SSB can be a QCL source of a TCI state for a PDCCH/PDSCH DMRS, the QCL rules described above may be applied.

As described above, when the UE receives the cell switch command, the UE has not yet measured the QCL source RS corresponding to the TRS/CSI-RS with the TCI state. The following effect may be assumed.

An equation for a TCI state switching delay may not be affected, and the TCI state switching delay may be calculated based on the assumption that an indicated TCI state is unknown in an existing specification. Here, the SSB in the existing specification may mean a QCL source SSB for a TRS/CSI-RS. The QCL source SSB for the TRS/CSI-RS may be a QCL source for a DMRS for a PDCCH/PDSCH of the target cell.

The description above means that the UE updates TCI state assumption after the UE measures only a root SSB (QCL source for the TRS/CSI-RS). In this case, it is irrelevant whether the UE has measured the QCL source for the TRS/CSI-RS for the DMRS.

An additional TCI state switching delay may be assumed to allow the UE to measure the QCL source for the TRS/CSI-RS for the DMRS of the DMRS. For example, similarly to "TOₖ * (T_{first-SSB} + T_{SSB-proc})/NR slot length" in the current specification, when a TCI state is indicated by a MAC CE for cell switch command, the part "TOₖ * (T_{first-SSB} + T_{SSB-proc})/NR slot length" may be replaced with "TOₖ * (T_{first-SSB} + T_{SSB-proc})/NR slot length + T_{first-CSI-RS} + T_{CSI-RS-proc}" or "T_{first-CSI-RS} + T_{CSI-RS-proc}."

According to the second embodiment described above, the UE can appropriately determine/judge a TCI state switching delay depending on a case.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the embodiments above
- supporting of configuration of a unified TCI state
- supporting of LTM
- supporting of a TRS/CSI-RS being configured as a QCL type A/D RS
- supporting of an SSB being configured as a QCL type A/D RS
- supporting of a TCI state switching delay
- supporting of a QCL rule for a TCI state

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of LTM, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment (first to second embodiments) of the present disclosure, the following supplementary notes of the invention will be given.

### {Supplementary Note 1}

A terminal including:
a receiving section that receives information related to a target cell to be a switching candidate for a serving cell and information related to a transmission configuration indication (TCI) state; and
a control section that determines a TCI state switching delay, based on an active TCI state list included in the information related to the TCI state.

### {Supplementary Note 2}

The terminal according to supplementary note 1, wherein when a target TCI state for the target cell is included in the list, the control section applies a TCI state switching delay longer than that in a case where the target TCI state is not included in the list.

### {Supplementary Note 3}

The terminal according to supplementary note 1 or 2, wherein the control section applies a certain QCL rule as a QCL source of a TCI state for a synchronization signal block.

### {Supplementary Note 4}

The terminal according to any one of supplementary notes 1 to 3, wherein the control section assumes that an indicated TCI state for a target cell with an additional physical cell ID (PCI) is unknown.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

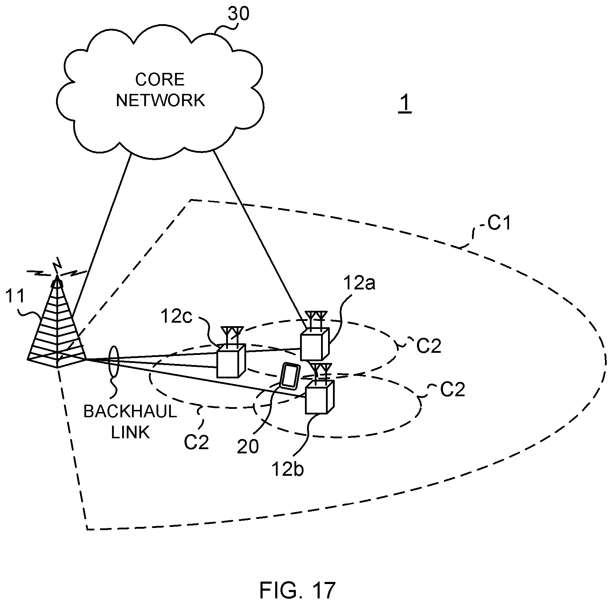

FIG. 17 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

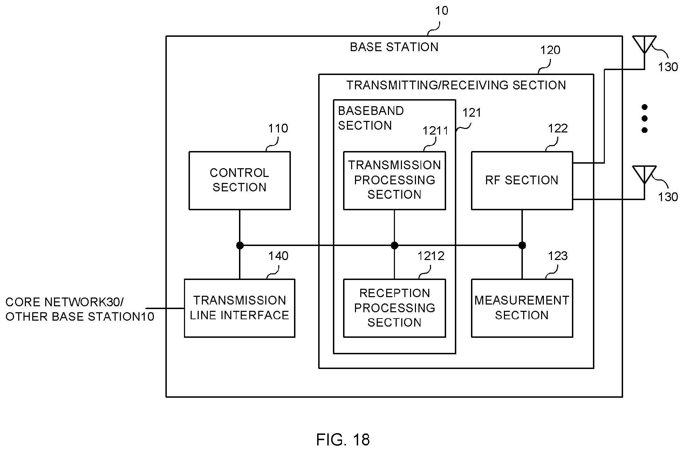

FIG. 18 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit information related to a target cell to be a switching candidate for a serving cell and information related to a transmission configuration indication (TCI) state. The control section 110 may determine a TCI state switching delay, based on an active TCI state list included in the information related to the TCI state.

### (User Terminal)

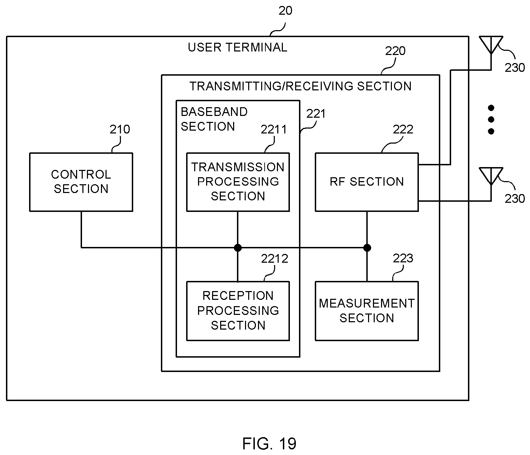

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a target cell to be a switching candidate for a serving cell and information related to a transmission configuration indication (TCI) state. The control section 210 may determine a TCI state switching delay, based on an active TCI state list included in the information related to the TCI state. When a target TCI state for the target cell is included in the list, the control section 210 may apply a TCI state switching delay longer than that in a case where the target TCI state is not included in the list. The control section 210 may apply a certain QCL rule as a QCL source of a TCI state for a synchronization signal block. The control section 210 may assume that an indicated TCI state for a target cell with an additional physical cell ID (PCI) is unknown.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

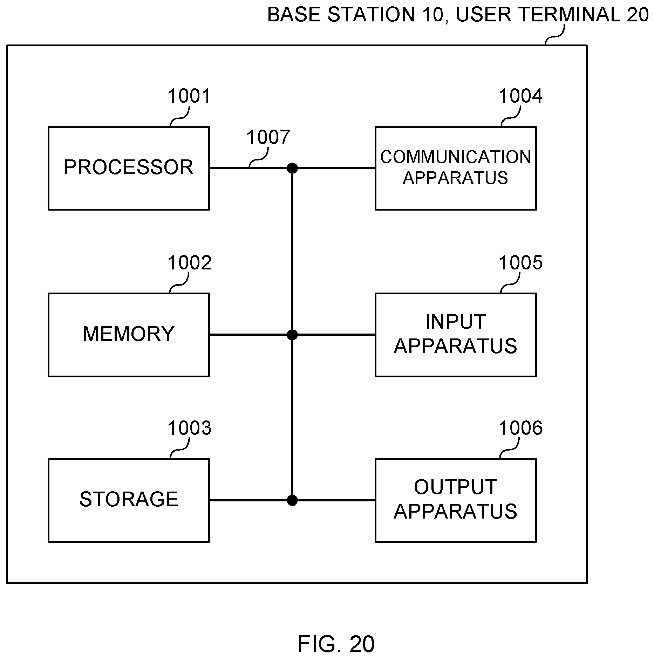

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

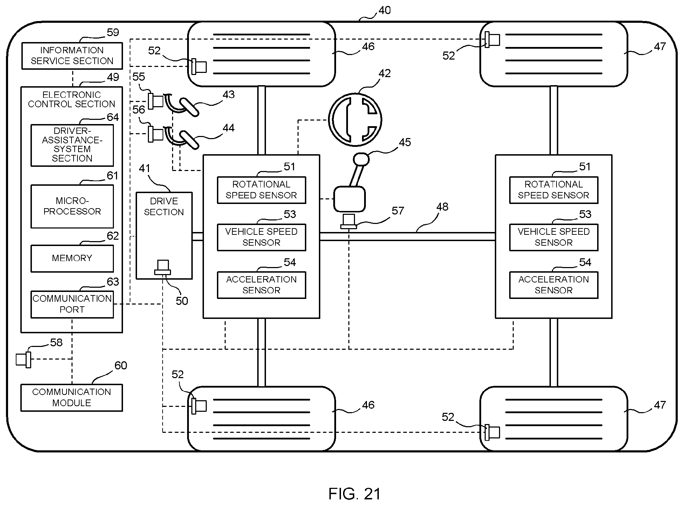

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-133911, filed on August 21, 2023, the contents of which are incorporated herein by reference in their entirety.

## Claims

1. A terminal comprising:
a receiving section that receives information related to a target cell to be a switching candidate for a serving cell and information related to a transmission configuration indication (TCI) state; and
a control section that determines a TCI state switching delay, based on an active TCI state list included in the information related to the TCI state.

2. The terminal according to claim 1, wherein
when a target TCI state for the target cell is included in the list, the control section applies a TCI state switching delay longer than that in a case where the target TCI state is not included in the list.

3. The terminal according to claim 1, wherein
the control section applies a certain QCL rule as a QCL source of a TCI state for a synchronization signal block.

4. The terminal according to claim 1, wherein
the control section assumes that an indicated TCI state for a target cell with an additional physical cell ID (PCI) is unknown.

5. A radio communication method for a terminal, comprising:
receiving information related to a target cell to be a switching candidate for a serving cell and information related to a transmission configuration indication (TCI) state; and
determining a TCI state switching delay, based on an active TCI state list included in the information related to the TCI state.

6. A base station comprising:
a transmitting section that transmits information related to a target cell to be a switching candidate for a serving cell and information related to a transmission configuration indication (TCI) state; and
a control section that determines a TCI state switching delay, based on an active TCI state list included in the information related to the TCI state.
